# EUROPEAN PATENT APPLICATION

(11) **EP 4 807 976 A1**
(43) Date of publication of application: **16.09.2026**
(21) Application number: 26163876.1
(22) Date of filing: 11.03.2026
(51) Int. Cl.: H02M 7/5387, H02J 3/38, H02M 1/32

(54) **POWER CONVERTER**

(30) Priority: 12.03.2025 CN 202510296594
(71) Applicant: HUAWEI TECHNOLOGIES CO., LTD., Shenzhen, Guangdong 518129 (CN)
(72) Inventor: LI, Junjie, Shenzhen 518129 (CN); GAO, Yongbing, Shenzhen 518129 (CN); ZHANG, Tao, Shenzhen 518129 (CN); YU, Xinyu, Shenzhen 518129 (CN); XIN, Kai, Shenzhen 518129 (CN)
(74) Representative: Gill Jennings & Every LLP

(57) **Abstract**

Embodiments of this application provide a power converter. The power converter includes a controller, at least two inverter bridge arms, and at least two relays, and an output end of each inverter bridge arm is connected to a power grid via at least one relay. The controller controls the at least two inverter bridge arms to convert a received direct current into an alternating current and output the alternating current. In a process of controlling the at least two inverter bridge arms to convert the received direct current into the alternating current and output the alternating current, the controller inputs a differential-mode voltage signal to a first inverter bridge arm and a second inverter bridge arm in the at least two inverter bridge arms, so that a difference between instantaneous voltage values of alternating currents output by the two inverter bridge arms changes. The controller first controls a relay connected to the first inverter bridge arm to be turned on, and then controls, within a specified time period of inputting the differential-mode voltage signal, a relay connected to the second inverter bridge arm to be turned on, to reduce contact impedance of the relay, where an absolute value of an instantaneous value of the differential-mode voltage signal within the specified time period is greater than or equal to a specified threshold.

## Description

### TECHNICAL FIELD

This application relates to the field of power electronics, and in particular, to a power converter.

### BACKGROUND

A surface of a contact of a grid-connected relay in an inverter is mostly coated with an inert metal. In an operating process of the inverter, a corrosive gas may exist outside the inverter and enter the inverter, or some highly chemically corrosive elements may exist inside the inverter. The corrosive gas and highly chemically corrosive elements may cause oxidation of the inert metal coated on the contact of the grid-connected relay and an increase in contact impedance of the grid-connected relay, and the relay is more likely to heat up when a power current passes, resulting in an overheating risk of the inverter.

### SUMMARY

Embodiments of this application provide a power converter, to reduce contact impedance of an oxidized relay in the power converter.

According to a first aspect, this application provides a power converter. The power converter includes a controller, at least two inverter bridge arms, and at least two relays, and an output end of each inverter bridge arm is connected to a power grid via at least one relay. The controller is configured to control the at least two inverter bridge arms to convert a received direct current into an alternating current and output the alternating current. The controller is configured to: in a process of controlling the at least two inverter bridge arms to convert the received direct current into the alternating current and output the alternating current, input a differential-mode voltage signal to a first inverter bridge arm and a second inverter bridge arm in the at least two inverter bridge arms, so that a difference between instantaneous voltage values of the alternating current output by the first inverter bridge arm and the alternating current output by the second inverter bridge arm changes. The controller is configured to: first control a relay connected to the first inverter bridge arm to be turned on, and then control, within a specified time period of inputting the differential-mode voltage signal to the first inverter bridge arm and the second inverter bridge arm, a relay connected to the second inverter bridge arm to be turned on, to reduce contact impedance of the relay connected to the second inverter bridge arm, where an absolute value of an instantaneous value of the differential-mode voltage signal within the specified time period is greater than or equal to a specified threshold.

In this application, in a process of cleaning the oxidized relay, cleaning effect on an oxidized layer of the relay is directly related to a voltage difference between two ends of the relay during turn-on. However, if other conditions remain unchanged, when a current loop is formed between the first inverter bridge arm and the second inverter bridge arm, the voltage difference between the two ends of the relay connected to the second inverter bridge arm is in direct proportion to the absolute value of the instantaneous value of the differential-mode voltage signal input by the controller. Therefore, in the process in which the controller performs voltage difference cleaning on the relay connected to the second inverter bridge arm in the power converter, the controller controls, within the specified time period of inputting the differential-mode voltage signal to the first inverter bridge arm and the second inverter bridge arm, the oxidized relay to be turned on. The absolute value of the instantaneous value of the differential-mode voltage signal input within the specified time period is greater than or equal to the specified threshold, and the differential-mode voltage signal within the specified time period does not cross a zero point, so that the input differential-mode voltage signal can be used to adjust the voltage difference between the two ends of the relay connected to the second inverter bridge arm, and the voltage difference between the two ends of the relay within the specified time period meets a voltage difference cleaning requirement. This avoids a case in which the voltage difference between the two ends of the relay during actual turn-on is excessively small due to a turn-on delay of the relay, improves reliability of voltage difference cleaning of the relay, reduces the contact impedance of the relay, and avoids overheating of the power converter caused by a power current passing through the oxidized relay.

In a possible implementation, the controller is configured to: first control the relay connected to the first inverter bridge arm to be turned on, and then control, when the absolute value of the instantaneous value of the differential-mode voltage signal is increased from less than the specified threshold to equal to the specified threshold, the relay connected to the second inverter bridge arm to be turned on. Herein, because the absolute value of the instantaneous value of the differential-mode voltage signal within the specified time period is equal to the specified threshold, when the oxidized relay has a turn-on delay, the specified time period may cover a time interval from a moment at which the controller controls the relay to be turned on to a moment of actually turning on the relay, to ensure that, when the relay is actually turned on, the absolute value of the instantaneous value of the differential-mode voltage signal is equal to the specified threshold, and the differential-mode voltage signal can be used to adjust the voltage difference between the two ends of the oxidized relay to meet the voltage difference cleaning requirement, thereby further improving reliability of voltage difference cleaning of the relay.

In a possible implementation, the controller is configured to: first control the relay connected to the first inverter bridge arm to be turned on, and then control, after specified waiting duration since the absolute value of the instantaneous value of the differential-mode voltage signal is increased from less than the specified threshold to greater than or equal to the specified threshold, the relay connected to the second inverter bridge arm to be turned on, where the specified waiting duration is less than or equal to duration of the specified time period. Herein, if the turn-on delay of the relay is long, for example, the time interval from the moment at which the controller controls the relay to be turned on to the moment of actually turning on the relay is equal to the specified time period, after the specified waiting duration since the absolute value of the instantaneous value of the differential-mode voltage signal is increased from less than the specified threshold to greater than or equal to the specified threshold, the oxidized relay is controlled to be turned on, and the moment of actually turning on the relay is within another specified time period, to ensure that, when the relay is actually turned on, the absolute value of the instantaneous value of the differential-mode voltage signal is equal to the specified threshold, and the differential-mode voltage signal can be used to adjust the voltage difference between the two ends of the oxidized relay to meet the voltage difference cleaning requirement, thereby further improving reliability of voltage difference cleaning of the relay.

In a possible implementation, the differential-mode voltage signal is a periodically changing alternating current signal, and the controller is configured to: after specified waiting duration since the absolute value of the instantaneous value of the differential-mode voltage signal is increased from less than the specified threshold to greater than or equal to the specified threshold each time, control the relay connected to the second inverter bridge arm to be turned on once, where the specified waiting duration increases each time the controller controls the relay connected to the second inverter bridge arm to be turned on, and the specified waiting duration is less than or equal to the duration of the specified time period. The specified waiting duration is set to increase each time the controller controls the relay to be turned on, so that moments at which the controller controls, for a plurality of times, the relay to be turned on are at different locations within all specified time periods. This can avoid a problem that the differential-mode voltage signal is at a zero point due to an uncertain turn-on delay of the relay at the moment of actually turning on the relay, to ensure that, when the relay is actually turned on, the absolute value of the instantaneous value of the differential-mode voltage signal is equal to the specified threshold, and ensure that the voltage difference between the two ends of the relay meets the voltage difference cleaning requirement.

In a possible implementation, after the controller controls the relay connected to the second inverter bridge arm to be turned on, the controller is configured to: if the contact impedance of the relay connected to the second inverter bridge arm is greater than a specified impedance threshold, control the relay connected to the second inverter bridge arm to be turned off, and re-control, within the specified time period of inputting the differential-mode voltage signal to the first inverter bridge arm and the second inverter bridge arm, the relay connected to the second inverter bridge arm to be turned on. Herein, a voltage between the two ends of the relay is detected via a sampling circuit, and the contact impedance of the relay is obtained based on the voltage between the two ends of the relay and a current that currently flows through the relay. If the contact impedance of the relay is still excessively high, the relay is controlled to be turned off, to perform next voltage difference cleaning, thereby further improving the cleaning effect on the oxidized relay.

In a possible implementation, the controller is configured to control an amplitude of the differential-mode voltage signal to increase as a quantity of times of controlling the relay connected to the second inverter bridge arm to be turned on increases. In the process of cleaning the oxidized relay, the cleaning effect on the oxidized layer of the relay is directly related to the voltage difference between the two ends of the relay during turn-on, and the voltage difference between the two ends of the relay is in direct proportion to the absolute value of the instantaneous value of the differential-mode voltage signal input by the controller. Because the absolute value of the instantaneous value of the differential-mode voltage signal is in direct proportion to the amplitude of the differential-mode voltage signal, the absolute value of the instantaneous value of the differential-mode voltage signal can be increased by increasing the amplitude of the differential-mode voltage signal, to increase the voltage difference between the two ends of the relay during turn-on, thereby improving the cleaning effect on the oxidized relay.

In a possible implementation, the controller is configured to control the amplitude of the differential-mode voltage signal to increase as an operating temperature at which the power converter is grid-connected last time increases. When the other conditions remain unchanged, heat generated by the relay is in direct proportion to the contact impedance of the relay. Therefore, as the operating temperature at which the power converter is grid-connected last time increases, the absolute value of the instantaneous value of the differential-mode voltage signal can be increased by increasing the amplitude of the differential-mode voltage signal by the controller, to increase the voltage difference between the two ends of the relay during turn-on, thereby improving the cleaning effect on the oxidized relay.

In a possible implementation, the differential-mode voltage signal is a square wave. Compared with a triangular wave with a same frequency, the square wave is input to the inverter bridge arm as a differential-mode voltage signal, and a change of an instantaneous value of the square wave in a periodicity is smaller, to ensure that the voltage difference between the two ends of the relay meets the cleaning requirement when voltage difference cleaning is performed on the oxidized relay.

In a possible implementation, the differential-mode voltage signal is a trapezoidal wave. Compared with a triangular wave with a same frequency, the trapezoidal wave is input to the inverter bridge arm as a differential-mode voltage signal, and a change of an instantaneous value of the trapezoidal wave in a periodicity is smaller, to ensure that the voltage difference between the two ends of the relay meets the cleaning requirement when voltage difference cleaning is performed on the oxidized relay.

### BRIEF DESCRIPTION OF DRAWINGS

FIG. 1 is a diagram of an application scenario of a power supply system according to this application;
FIG. 2 is a diagram of another application scenario of a power supply system according to this application;
FIG. 3 is a diagram of a structure of a power converter according to this application;
FIG. 4 is a diagram of another structure of a power converter according to this application;
FIG. 5 is a diagram of control on relay cleaning of a power converter according to this application;
FIG. 6 is a diagram of other control on relay cleaning of a power converter according to this application; and
FIG. 7 is a diagram of other control on relay cleaning of a power converter according to this application.

### DESCRIPTION OF EMBODIMENTS

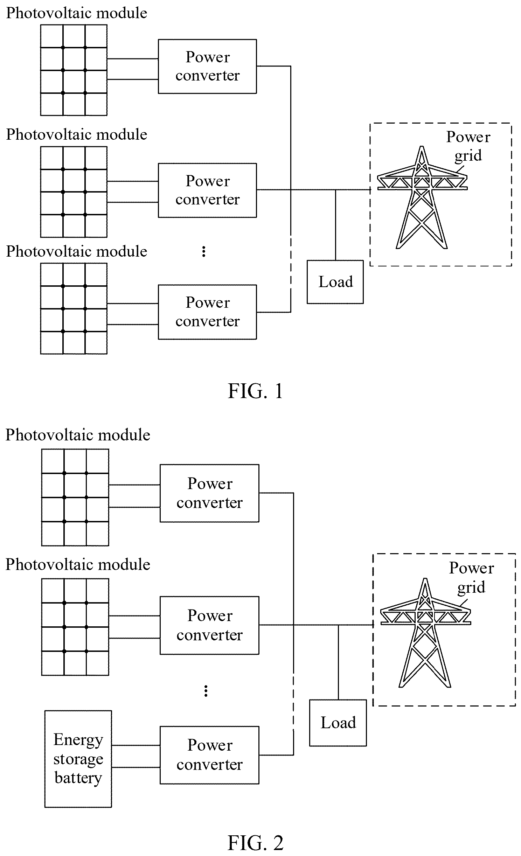

FIG. 1 is a diagram of an application scenario of a power supply system according to this application. The power supply system provided in this application may include a direct current power supply and at least one power converter. The direct current power supply is a photovoltaic module. For example, the power supply system includes a plurality of power converters. A direct current end of the power converter is configured to connect to a photovoltaic module, and an alternating current end of the power converter is connected in parallel and then configured to connect to a power grid and a load. The power converter may perform inversion on a direct current provided by the photovoltaic module, and output an alternating current obtained through inversion to the power grid and the load for power supply.

In some feasible implementations, the direct current power supply is an energy storage battery, a direct current end of each power converter may be configured to connect to the energy storage battery. FIG. 2 is a diagram of another application scenario of the power supply system according to this application. In the plurality of power converters in the power supply system, direct current ends of some power converters are configured to connect to the energy storage battery, and alternating current ends of the plurality of power converters are connected in parallel and then configured to connect to the power grid and the load. Each power converter may perform inversion on a direct current provided by the photovoltaic module or the energy storage battery, and output an alternating current obtained through inversion to the power grid and the load for power supply. Herein, the power converter connected to the photovoltaic module in the power supply system may be a photovoltaic inverter, and the power converter connected to the energy storage battery in the power supply system may be a converter.

In the application scenario of the power supply system shown in FIG. 1 or FIG. 2, the power converter includes a controller, a power conversion circuit, and a relay. An input end of the power conversion circuit is connected to the photovoltaic module or the energy storage battery, and an output end of the power conversion circuit is connected to the power grid and the load via the relay. The controller is configured to: after the power converter is connected to the photovoltaic module or the energy storage battery, control the power conversion circuit to convert a received direct current into an alternating current, and control the relay to be turned on to electrically connect the power conversion circuit to the power grid and the load, so as to supply power to the power grid and the load. It should be understood that, when other conditions remain unchanged, heat generated by the relay is in direct proportion to contact impedance of the relay. Herein, because a surface of a contact of the relay in the power conversion circuit is mostly coated with an inert metal, the following cases may exist in an operating process of the power converter: A corrosive gas may exist outside the power converter and enter the power converter, or some highly chemically corrosive elements may exist inside the power converter. Corrosive factors such as the corrosive gas and the highly chemically corrosive element may cause oxidation of the relay and an increase in contact impedance of the relay. When a power current passes, the relay is more likely to generate more heat and has an overheating risk, affecting normal operation and safety of the power converter. A specific voltage is applied to two ends of the oxidized relay, and in particular, a specific voltage difference between the two ends of the relay is ensured when the relay is turned on, so that an electrochemical reaction occurs on an oxidized layer of the relay, and the oxidized layer on the surface of the contact of the relay is removed, to restore conductivity and switching performance of the relay. This cleaning method is also referred to as voltage difference cleaning.

At present, in a process of performing voltage difference cleaning on the oxidized relay, a common-mode voltage signal like a triangular wave is injected into the power converter when the relay is controlled to be turned on, to form a voltage difference at the two ends of the relay, and the relay is turned on when the voltage difference exists between the two ends of the relay, to perform voltage difference cleaning on the oxidized relay. However, in a process of injecting the common-mode voltage signal like the triangular wave, a voltage difference between an output voltage of the power converter and a voltage of the power grid may be zero. Because the relay has different turn-on delays, and a turn-on action time of the relay is uncertain, a voltage difference at a moment when the relay is turned on may be within a large voltage difference range or near zero, and voltage difference cleaning effect cannot be ensured.

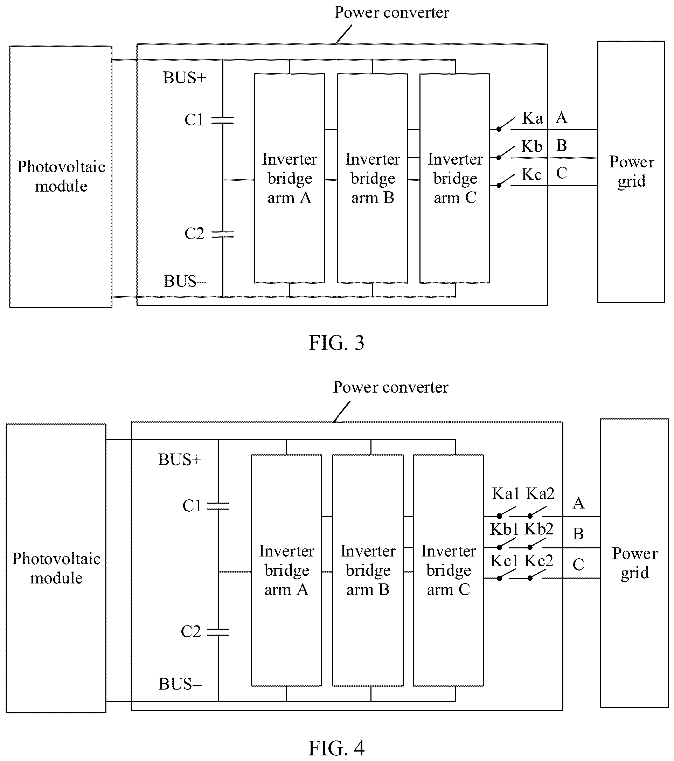

To improve voltage difference cleaning effect on an oxidized relay, a power converter provided in this application includes a controller, at least two inverter bridge arms, and at least two relays, and each inverter bridge arm is connected to a power grid via at least one relay. For example, the power converter includes three inverter bridge arms. FIG. 3 is a diagram of a structure of a power converter according to this application. The power converter includes an inverter bridge arm A, an inverter bridge arm B, and an inverter bridge arm C. Output ends of the inverter bridge arm A, the inverter bridge arm B, and the inverter bridge arm C are respectively used as an A-phase output end, a B-phase output end, and a C-phase output end of the power converter. The inverter bridge arm A, the inverter bridge arm B, and the inverter bridge arm C in the power converter are connected to the power grid via a relay Ka, a relay Kb, and a relay Kc respectively. In addition, the power converter includes a bus capacitor C1 and a bus capacitor C2 that are connected in series, and the inverter bridge arm A is connected in parallel to two ends of the bus capacitor C1 and the bus capacitor C2 that are connected in series. For example, the power converter is connected to a photovoltaic module. The bus capacitor C1 is connected to a positive electrode of the photovoltaic module through a direct current bus BUS+, and the bus capacitor C2 is connected to a negative electrode of the photovoltaic module through a direct current bus BUS-. For example, before the power converter is connected to the power grid to operate, voltage difference cleaning is performed on the relay connected to the power converter. The controller (not shown in FIG. 3) in the power converter is configured to control the inverter bridge arm A, the inverter bridge arm B, and the inverter bridge arm C to convert a direct current from the two bus capacitors into an alternating current and output the alternating current. Further, the plurality of inverter bridge arms included in the power converter include a first inverter bridge arm and a second inverter bridge arm. If a relay connected to the second inverter bridge arm is oxidized and needs to be cleaned, the controller inputs a differential-mode voltage signal to the first inverter bridge arm and the second inverter bridge arm, so that a difference between instantaneous voltage values of the alternating current output by the first inverter bridge arm and the alternating current output by the second inverter bridge arm changes. For example, in a process of controlling the inverter bridge arm A, the inverter bridge arm B, and the inverter bridge arm C to convert the received direct current into the alternating current and output the alternating current, when the relay Kb connected to the inverter bridge arm B is oxidized and needs to be cleaned, the controller inputs a differential-mode voltage signal to the inverter bridge arm A and the inverter bridge arm B, or inputs a differential-mode voltage signal to the inverter bridge arm A and the inverter bridge arm C. For example, the controller inputs a differential-mode voltage signal to the inverter bridge arm A and the inverter bridge arm B (that is, the inverter bridge arm A is used as the first inverter bridge arm, and the inverter bridge arm B is used as the second inverter bridge arm). After the differential-mode voltage signal is input to the inverter bridge arm A and the inverter bridge arm B, a difference between instantaneous voltage values of an alternating current output by the inverter bridge arm A and an alternating current output by the inverter bridge arm B (that is, a line voltage Uab between the A-phase output end and the B-phase output end) changes. Then, the controller is further configured to: control the relay Ka connected to the inverter bridge arm A to be turned on, and then control, within a specified time period of inputting the differential-mode voltage signal to the inverter bridge arm A and the inverter bridge arm B, the relay Kb connected to the inverter bridge arm B to be turned on, so that a current loop is formed between the inverter bridge arm A and the inverter bridge arm B, and a voltage difference is formed between two ends of the relay Kb when the relay Kb is turned on, to reduce contact impedance of the relay Kb. An absolute value of an instantaneous value of the differential-mode voltage signal within the specified time period is greater than or equal to a specified threshold. Herein, in a process of cleaning the oxidized relay, cleaning effect on the oxidized layer of the relay is directly related to the voltage difference between the two ends of the relay during turn-on. If other conditions remain unchanged, the current loop is formed between the inverter bridge arm A and the inverter bridge arm B, and the voltage difference between the two ends of the relay Kb connected to the inverter bridge arm B is in direct proportion to the absolute value of the instantaneous value of the differential-mode voltage signal input by the controller. Therefore, the controller controls, within a specified time period of inputting the differential-mode voltage signal, the relay Kb connected to the inverter bridge arm B to be turned on. The absolute value of the instantaneous value of the differential-mode voltage signal within the specified time period is greater than or equal to the specified threshold, and no zero-crossing occurs within the specified time period, so that the voltage difference between the two ends of the relay Kb meets a voltage difference cleaning requirement within the specified time period. This avoids a case in which the voltage difference between the two ends of the relay Kb during actual turn-on is excessively small due to a turn-on delay of the relay Kb, improves reliability of voltage difference cleaning of the relay Kb, reduces the contact impedance of the relay Kb, and avoids overheating of the power converter. It may be understood that a cleaning process of another relay in the power converter is similar to the cleaning process of the relay Kb. Details are not described herein again.

Optionally, an output end of each inverter bridge arm may be further connected to two relays that are connected in series. FIG. 4 is a diagram of another structure of the power converter according to this application. As shown in FIG. 4, an output end of each inverter bridge arm is connected to two relays. An output end of an inverter bridge arm A is connected to a relay Ka1 and a relay Ka2, an output end of an inverter bridge arm B is connected to a relay Kb1 and a relay Kb2, and an output end of an inverter bridge arm C is connected to a relay Kc 1 and a relay Kc2. A quantity of relays connected to each inverter bridge arm is increased, so that a case in which some relays in relays connected to any inverter bridge arm are faulty and cannot be disconnected from the power grid can be avoided. The controller (not shown in FIG. 4) in the power converter shown in FIG. 4 is configured to control the inverter bridge arm A, the inverter bridge arm B, and the inverter bridge arm C to convert a direct current from two bus capacitors into an alternating current and output the alternating current. Before the power converter is connected to the power grid to operate, when any relay in the power converter shown in FIG. 4 is oxidized and needs to be cleaned, for example, when the relay Kb1 connected to the inverter bridge arm B is oxidized and needs to be cleaned, the controller is configured to input a differential-mode voltage signal to the inverter bridge arm A and the inverter bridge arm B, so that a difference between instantaneous voltage values of an alternating current output by the inverter bridge arm A and an alternating current output by the inverter bridge arm B changes. Then, the controller is further configured to control the relay Ka1 and the relay Ka2 that are connected to the inverter bridge arm A, and the relay Kb2 connected to the inverter bridge arm B to be turned on, and a sequence of turning on the relays is not limited. Then, the controller controls, within a specified time period of inputting the differential-mode voltage signal to the inverter bridge arm A and the inverter bridge arm B, the relay Kb1 connected to the inverter bridge arm B to be turned on. An absolute value of an instantaneous value of the differential-mode voltage signal within the specified time period is greater than or equal to a specified threshold. Herein, the controller controls, within the specified time period of inputting the differential-mode voltage signal, the relay Kb1 connected to the inverter bridge arm B to be turned on. The absolute value of the instantaneous value of the differential-mode voltage signal within the specified time period is greater than or equal to the specified threshold, and no zero-crossing occurs within the specified time period, so that the input differential-mode voltage signal can make a voltage difference between two ends of the relay Kb1 meet a voltage difference cleaning requirement within the specified time period. This avoids a case in which the voltage difference between the two ends of the relay Kb1 during actual turn-on is excessively small due to a turn-on delay of the relay Kb1, improves reliability of voltage difference cleaning of the relay Kb1, reduces contact impedance of the relay Kb1, and avoids overheating of the power converter. It may be understood that a cleaning process of another relay in the power converter is similar to the cleaning process of the relay Kb1. Details are not described herein again.

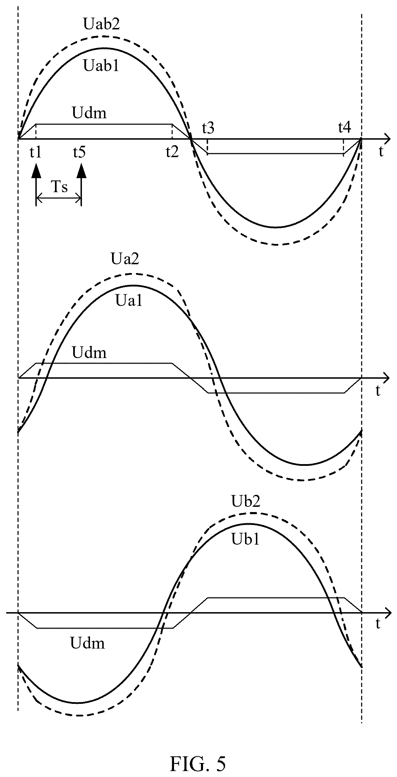

In some feasible implementations, the controller is configured to: first control a relay connected to the first inverter bridge arm to be turned on, and then control, when the absolute value of the instantaneous value of the differential-mode voltage signal is increased from less than the specified threshold to equal to the specified threshold, a relay connected to the second inverter bridge arm to be turned on. FIG. 5 is a diagram of control on relay cleaning of the power converter according to this application. For example, the differential-mode voltage signal input by the controller to the inverter bridge arm in the power converter is a trapezoidal wave, and the relay Kb connected to the inverter bridge arm B in the power converter shown in FIG. 3 is oxidized and needs to be cleaned. As shown in FIG. 5, the controller inputs a differential-mode voltage signal Udm to the inverter bridge arm A and the inverter bridge arm B, where a phase and a frequency of the differential-mode voltage signal Udm are the same as those of the line voltage Uab between the output end of the inverter bridge arm A and the output end of the inverter bridge arm B. After the differential-mode voltage signal Udm is input, the alternating current output by the inverter bridge arm A changes from Ual to Ua2, and the alternating current output by the inverter bridge arm B changes from Ub1 to Ub2. A phase of the differential-mode voltage signal injected into the inverter bridge arm A is opposite to that of the differential-mode voltage signal injected into the inverter bridge arm B, so that the line voltage between the output end of the inverter bridge arm A and the output end of the inverter bridge arm B changes from Uab1 to Uab2. If a maximum value of the differential-mode voltage signal Udm is used as the specified threshold (or the specified threshold may be set to be less than the maximum value of the differential-mode voltage signal Udm), the specified time period of inputting the differential-mode voltage signal Udm is between t1 and t2, or may be between t3 and t4. Within the time period between t1 and t2, an absolute value of an instantaneous value of the differential-mode voltage signal Udm is equal to the specified threshold. Within the time period between t3 and t4, an absolute value of an instantaneous value of the differential-mode voltage signal Udm is equal to the specified threshold, and a direction of the differential-mode voltage signal Udm is opposite to a direction of the differential-mode voltage signal Udm within the time period between t1 and t2. In other words, the absolute value of the instantaneous value of the differential-mode voltage signal Udm within the specified time period is greater than or equal to the specified threshold. The specified time period between t1 and t2 is used as an example. The controller is configured to: control the relay Ka connected to the inverter bridge arm A to be turned on, and then control, when the absolute value of the instantaneous value of the differential-mode voltage signal Udm is increased from less than the specified threshold to exactly equal to the specified threshold, that is, at a moment t1, control the relay Kb connected to the inverter bridge arm B to be turned on. Herein, because the absolute value of the instantaneous value of the differential-mode voltage signal Udm between t1 and t2 is equal to the specified threshold, when the relay has a turn-on delay, the specified time period between t1 and t2 may cover a time interval from a moment at which the controller controls the relay Kb to be turned on to a moment of actually turning on the relay Kb, to ensure that, when the relay Kb is actually turned on, the absolute value of the instantaneous value of the differential-mode voltage signal Udm is equal to the specified threshold, and the differential-mode voltage signal Udm can be used to adjust a voltage difference between two ends of the relay Kb connected to the inverter bridge arm B, so that the voltage difference between the two ends of the relay Kb meets a voltage difference cleaning requirement, thereby further improving reliability of voltage difference cleaning of the relay.

In some feasible implementations, if the turn-on delay of the relay is long, the controller is configured to: first control the relay connected to the first inverter bridge arm to be turned on, and then control, after specified waiting duration since the absolute value of the instantaneous value of the differential-mode voltage signal is increased from less than the specified threshold to greater than or equal to the specified threshold, the relay connected to the second inverter bridge arm to be turned on, where the specified waiting duration is less than or equal to duration of the specified time period. Similarly, for example, in the power converter shown in FIG. 3, the relay Kb connected to the inverter bridge arm B is oxidized and needs to be cleaned. Refer to FIG. 5 again. If a turn-on delay of the relay Kb is long, for example, the time interval from the moment at which the controller controls the relay Kb to be turned on to the moment of actually turning on the relay Kb is equal to the specified time period, the controller may be configured to: control the relay Ka connected to the inverter bridge arm A to be turned on, and then control, after specified waiting duration Ts since the absolute value of the instantaneous value of the differential-mode voltage signal Udm is increased from less than the specified threshold to exactly equal to the specified threshold, that is, at a moment t5 after a moment t1, the relay Kb connected to the inverter bridge arm B to be turned on, where a moment of actually turning on the relay Kb is within another specified time period, namely, between t3 and t4, to ensure that, when the relay Kb is actually turned on, the absolute value of the instantaneous value of the differential-mode voltage signal Udm is equal to the specified threshold, and the differential-mode voltage signal Udm can be used to adjust the voltage difference between the two ends of the relay Kb connected to the inverter bridge arm B, so that the voltage difference between the two ends of the relay Kb meets the voltage difference cleaning requirement, thereby further improving reliability of voltage difference cleaning of the relay.

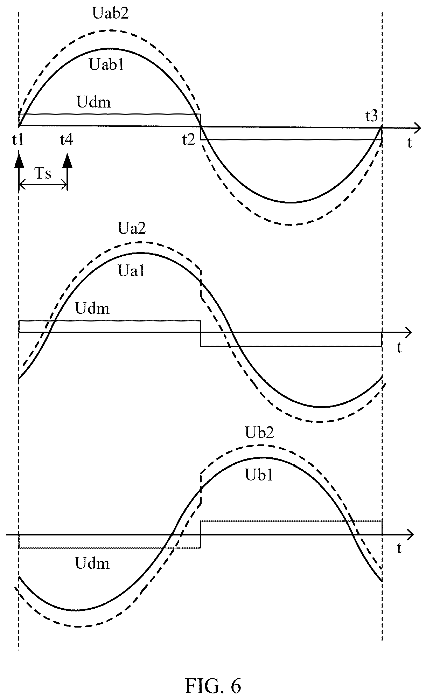

In some feasible implementations, the differential-mode voltage signal input by the controller to the inverter bridge arm in the power converter may be a square wave. FIG. 6 is a diagram of other control on relay cleaning of the power converter according to this application. Similarly, for example, in the power converter shown in FIG. 3, the relay Kb connected to the inverter bridge arm B is oxidized and needs to be cleaned. As shown in FIG. 6, the controller inputs a differential-mode voltage signal Udm to the inverter bridge arm A and the inverter bridge arm B, where a phase and a frequency of the differential-mode voltage signal Udm are the same as those of the line voltage Uab between the output end of the inverter bridge arm A and the output end of the inverter bridge arm B. After the differential-mode voltage signal Udm is input, the alternating current output by the inverter bridge arm A changes from Ua1 to Ua2, and the alternating current output by the inverter bridge arm B changes from Ub1 to Ub2. A phase of the differential-mode voltage signal injected into the inverter bridge arm A is opposite to that of the differential-mode voltage signal injected into the inverter bridge arm B, so that the line voltage between the output end of the inverter bridge arm A and the output end of the inverter bridge arm B changes from Uab1 to Uab2. If a maximum value of the differential-mode voltage signal Udm is used as the specified threshold (or the specified threshold may be set to be less than the maximum value of the differential-mode voltage signal Udm), the specified time period of inputting the differential-mode voltage signal Udm is between t1 and t2, or may be between t2 and t3. Within the time period between t1 and t2, an absolute value of an instantaneous value of the differential-mode voltage signal Udm is equal to the specified threshold. Within the time period between t2 and t3, an absolute value of an instantaneous value of the differential-mode voltage signal Udm is equal to the specified threshold, and a direction of the differential-mode voltage signal Udm is opposite to a direction of the differential-mode voltage signal Udm within the time period between t1 and t2.

Similarly, the controller is configured to: control the relay Ka connected to the inverter bridge arm A to be turned on, and then control, when the absolute value of the instantaneous value of the differential-mode voltage signal Udm is increased from less than the specified threshold to exactly equal to the specified threshold, that is, at a moment t1, the relay Kb connected to the inverter bridge arm B to be turned on. Herein, because the absolute value of the instantaneous value of the differential-mode voltage signal Udm between t1 and t2 is equal to the specified threshold, when the relay has a turn-on delay, the specified time period between t1 and t2 may cover a time interval from a moment at which the controller controls the relay Kb to be turned on to a moment of actually turning on the relay Kb, to ensure that, when the relay Kb is actually turned on, the absolute value of the instantaneous value of the differential-mode voltage signal Udm is equal to the specified threshold, and the differential-mode voltage signal Udm can be used to adjust a voltage difference between two ends of the relay Kb connected to the inverter bridge arm B.

In some feasible implementations, the differential-mode voltage signal is a periodically changing alternating current signal, and the controller controls, for a plurality of times, the relay to be turned on, to perform voltage difference cleaning on the relay. Specifically, the controller is configured to control, after specified waiting duration since the absolute value of the instantaneous value of the differential-mode voltage signal is increased from less than the specified threshold to greater than or equal to the specified threshold each time, the relay connected to the second inverter bridge arm to be turned on once. The specified waiting duration increases each time the controller controls the relay connected to the second inverter bridge arm to be turned on, and the specified waiting duration is less than or equal to duration of the specified time period.

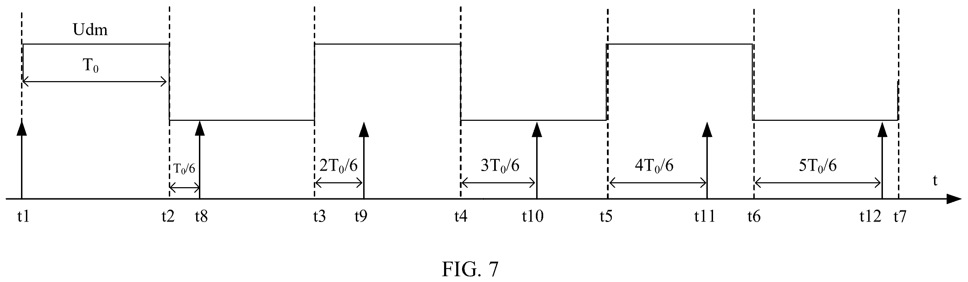

FIG. 7 is a diagram of other control on relay cleaning of the power converter according to this application. For example, the differential-mode voltage signal input by the controller to the inverter bridge arm in the power converter is a periodically changing square wave, and voltage difference cleaning is performed on the relay Kb connected to the inverter bridge arm B in the power converter shown in FIG. 3. As shown in FIG. 7, if a maximum value of the differential-mode voltage signal Udm is used as the specified threshold, the specified time period of inputting the differential-mode voltage signal Udm includes a time period between t1 and t2, a time period between t2 and t3, a time period between t3 and t4, a time period between t4 and t5, a time period between t5 and t6, a time period between t6 and t7, and the like. The controller is configured to control, after specified waiting duration since the absolute value of the instantaneous value of the differential-mode voltage signal Udm is equal to the specified threshold each time, the relay Kb connected to the inverter bridge arm B to be turned on once. For example, an initial value of the specified waiting duration is 0, and duration in which the specified waiting duration increases each time is T₀/6. T₀ is duration in which the differential-mode voltage signal reaches the maximum value in each periodicity. First, the absolute value of the instantaneous value of the differential-mode voltage signal Udm is equal to the specified threshold at a moment t1, and the controller controls, at the moment t1, the relay Kb connected to the inverter bridge arm B to be turned on once, and then controls the relay Kb to be turned off. The absolute value of the instantaneous value of the differential-mode voltage signal Udm is equal to the specified threshold at a moment t2, the specified waiting duration increases by T₀/6, and the controller controls, at a moment t8 that is T₀/6 later than the moment t2, the relay Kb connected to the inverter bridge arm B to be turned on, and then controls the relay Kb to be turned off. The absolute value of the instantaneous value of the differential-mode voltage signal Udm is equal to the specified threshold at a moment t3, the specified waiting duration increases by T₀/6, and the controller controls, at a moment t9 that is 2T₀/6 later than the moment t3, the relay Kb connected to the inverter bridge arm B to be turned on, and then controls the relay Kb to be turned off. Similarly, the absolute value of the instantaneous value of the differential-mode voltage signal Udm is equal to the specified threshold at moments t4, t5, and t6, and the controller separately controls, at a moment t10 that is 3T₀/6 later than the moment t4, a moment t11 that is 4T₀/6 later than the moment t5, and a moment t12 that is 5T₀/6 later than the moment t6, the relay Kb connected to the inverter bridge arm B to be turned on. Herein, after the specified waiting duration since the absolute value of the instantaneous value of the differential-mode voltage signal Udm is equal to the specified threshold each time, the relay Kb connected to the inverter bridge arm B is controlled to be turned on once, and the specified waiting duration increases each time the controller controls the relay to be turned on, so that when the controller controls, for a plurality of times, the relay to be turned on, moments of controlling, for the plurality of times, the relay to be turned on are at different locations within all specified time periods. For example, as shown in FIG. 7, a moment at which the controller controls, for the first time, the relay to be turned on is at a start moment (that is, t1) within the specified time period between t1 and t2. In addition, as a quantity of turn-on times increases, a moment at which the controller controls the relay to be turned on gradually becomes later, for example, is at a middle moment (that is, t10) within the specified time period between t4 and t5 or an end moment (that is, t12) within the specified time period between t6 and t7. The moments at which the controller controls, for the plurality of times, the relay to be turned on are at the different locations within all the specified time periods. This can a problem that the differential-mode voltage signal Udm is at a zero point due to an uncertain turn-on delay of the relay at the moment of actually turning on the relay, to ensure that, when the relay is actually turned on, the absolute value of the instantaneous value of the differential-mode voltage signal Udm is equal to the specified threshold, and the differential-mode voltage signal Udm can be used to adjust the voltage difference between the two ends of the relay Kb connected to the inverter bridge arm B, so as to ensure that the voltage difference between the two ends of the relay meets the voltage difference cleaning requirement.

In some feasible implementations, after the controller controls the relay connected to the second inverter bridge arm to be turned on, the controller is configured to: if the contact impedance of the relay connected to the second inverter bridge arm is greater than a specified impedance threshold, control the relay connected to the second inverter bridge arm to be turned off, and re-control, within the specified time period of inputting the differential-mode voltage signal to the first inverter bridge arm and the second inverter bridge arm, the relay connected to the second inverter bridge arm to be turned on. For example, the relay Kb connected to the inverter bridge arm B in the power converter shown in FIG. 3 is cleaned. The controller is configured to: input the differential-mode voltage signal to the inverter bridge arm A and the inverter bridge arm B in a process of controlling the inverter bridge arm A, the inverter bridge arm B, and the inverter bridge arm C to convert the received direct current into the alternating current and output the alternating current, to change the difference between the instantaneous voltage values of the alternating current output by the inverter bridge arm A and the alternating current output by the inverter bridge arm B. Then, the controller is further configured to: control the relay Ka connected to the inverter bridge arm A to be turned on, and then control, within the specified time period of inputting the differential-mode voltage signal to the inverter bridge arm A and the inverter bridge arm B, the relay Kb connected to the inverter bridge arm B to be turned on, to reduce contact impedance of the relay Kb. When the relay Kb is turned on, the controller obtains the contact impedance of the relay Kb. For example, a voltage between the two ends of the relay is detected via a sampling circuit, and the contact impedance of the relay Kb is obtained based on the voltage between the two ends of the relay and a current (namely, a current at the B-phase output end of the power converter) that currently flows through the relay. If the contact impedance of the relay Kb is still excessively high, for example, greater than the specified impedance threshold, the relay Kb is controlled to be turned off, to perform next voltage difference cleaning, thereby further improving the cleaning effect on the oxidized relay.

In some feasible implementations, when the controller controls, for a plurality of times, the relay to be turned on, to perform voltage difference cleaning on the relay, the controller controls an amplitude of the differential-mode voltage signal to increase as a quantity of times of controlling the relay connected to the second inverter bridge arm to be turned on increases. Specifically, an expression of the differential-mode voltage signal input by the controller to the power converter is: $g \left(t\right) = {A}_{m} ∗ δ \left(2{πf}_{g}∗t\right)$

Herein, *Aₘ* is a differential-mode voltage amplitude, the differential-mode voltage amplitude may be set to a positive value or a negative value, *f_{g}* is a fundamental wave frequency, and *δ*(*t*) is a pulse function or a trapezoidal wave function. It should be understood that, in the process of cleaning the oxidized relay, the cleaning effect on the oxidized layer of the relay is directly related to the voltage difference between the two ends of the relay during turn-on, and the voltage difference between the two ends of the relay is in direct proportion to the absolute value of the instantaneous value of the differential-mode voltage signal input by the controller.

After the controller controls, for the plurality of times, the relay to be turned on, to perform voltage difference cleaning on the relay, if the contact impedance of the relay is still excessively high, it indicates that, when the relay is turned on, the input differential-mode voltage signal cannot make the voltage difference between the two ends of the relay meet the cleaning requirement. Because the absolute value of the instantaneous value of the differential-mode voltage signal is in direct proportion to the amplitude of the differential-mode voltage signal, the absolute value of the instantaneous value of the differential-mode voltage signal can be increased by increasing the amplitude of the differential-mode voltage signal, to increase the voltage difference between the two ends of the relay during turn-on, thereby improving the cleaning effect on the oxidized relay.

In some feasible implementations, the controller is configured to control the amplitude of the differential-mode voltage signal to increase as an operating temperature at which the power converter is grid-connected last time increases. When the other conditions remain unchanged, heat generated by the relay is in direct proportion to the contact impedance of the relay. Therefore, before the oxidized relay is cleaned, the operating temperature at which the power converter is grid-connected last time is obtained. If the temperature is higher, the contact impedance of the relay is higher, and an oxidation degree is higher. For example, a temperature detection apparatus is disposed on the corresponding relay, and the temperature detection apparatus may be disposed on a wiring terminal of the relay or disposed beside a contact of the relay. A heating temperature of the relay during turn-on is obtained via the temperature detection apparatus, to obtain the operating temperature at which the power converter is grid-connected. As the operating temperature at which the power converter is grid-connected last time increases, the absolute value of the instantaneous value of the differential-mode voltage signal can be increased by increasing the amplitude of the differential-mode voltage signal by the controller, to increase the voltage difference between the two ends of the relay during turn-on, thereby improving the cleaning effect on the oxidized relay.

## Claims

1. A power converter, wherein the power converter comprises a controller, at least two inverter bridge arms, and at least two relays, and an output end of each inverter bridge arm is connected to a power grid via at least one relay;
the controller is configured to control the at least two inverter bridge arms to convert a received direct current into an alternating current and output the alternating current;
the controller is configured to: in a process of controlling the at least two inverter bridge arms to convert the received direct current into the alternating current and output the alternating current, input a differential-mode voltage signal to a first inverter bridge arm and a second inverter bridge arm in the at least two inverter bridge arms, so that a difference between instantaneous voltage values of the alternating current output by the first inverter bridge arm and the alternating current output by the second inverter bridge arm changes; and
the controller is configured to: first control a relay connected to the first inverter bridge arm to be turned on, and then control, within a specified time period of inputting the differential-mode voltage signal to the first inverter bridge arm and the second inverter bridge arm, a relay connected to the second inverter bridge arm to be turned on, to reduce contact impedance of the relay connected to the second inverter bridge arm, wherein an absolute value of an instantaneous value of the differential-mode voltage signal within the specified time period is greater than or equal to a specified threshold.

2. The power converter according to claim 1, wherein the controller is configured to: first control the relay connected to the first inverter bridge arm to be turned on, and then control, when the absolute value of the instantaneous value of the differential-mode voltage signal is increased from less than the specified threshold to equal to the specified threshold, the relay connected to the second inverter bridge arm to be turned on.

3. The power converter according to claim 1, wherein the controller is configured to: first control the relay connected to the first inverter bridge arm to be turned on, and then control, after specified waiting duration since the absolute value of the instantaneous value of the differential-mode voltage signal is increased from less than the specified threshold to greater than or equal to the specified threshold, the relay connected to the second inverter bridge arm to be turned on, wherein the specified waiting duration is less than or equal to duration of the specified time period.

4. The power converter according to claim 3, wherein the differential-mode voltage signal is a periodically changing alternating current signal, and the controller is configured to: after specified waiting duration since the absolute value of the instantaneous value of the differential-mode voltage signal is increased from less than the specified threshold to greater than or equal to the specified threshold each time, control the relay connected to the second inverter bridge arm to be turned on once, wherein
the specified waiting duration increases each time the controller controls the relay connected to the second inverter bridge arm to be turned on, and the specified waiting duration is less than or equal to the duration of the specified time period.

5. The power converter according to any one of claims 1 to 4, wherein after the controller controls the relay connected to the second inverter bridge arm to be turned on, the controller is configured to: if the contact impedance of the relay connected to the second inverter bridge arm is greater than a specified impedance threshold, control the relay connected to the second inverter bridge arm to be turned off, and re-control, within the specified time period of inputting the differential-mode voltage signal to the first inverter bridge arm and the second inverter bridge arm, the relay connected to the second inverter bridge arm to be turned on.

6. The power converter according to claim 5, wherein the controller is configured to control an amplitude of the differential-mode voltage signal to increase as a quantity of times of controlling the relay connected to the second inverter bridge arm to be turned on increases.

7. The power converter according to any one of claims 1 to 6, wherein the controller is configured to control the amplitude of the differential-mode voltage signal to increase as an operating temperature at which the power converter is grid-connected last time increases.

8. The power converter according to claim 1, wherein the differential-mode voltage signal is a square wave.

9. The power converter according to claim 1, wherein the differential-mode voltage signal is a trapezoidal wave.
